# EUROPÄISCHE PATENTSCHRIFT

(11) **EP 1 757 401 B1**
(45) Veröffentlichungstag und Bekanntmachung des Hinweises auf die Patenterteilung: **20.11.2013**
(21) Anmeldenummer: 05021653.0
(22) Anmeldetag: 04.10.2005
(51) Int. Cl.: B23K 35/38, B23K 9/00

(54) **Verfahren zum Lichtbogenfügen**
Process for arc welding
procédé de soudage par arc électrique

(30) Priorität: 26.08.2005 DE 102005040552
(43) Veröffentlichungstag der Anmeldung: 28.02.2007
(73) Patentinhaber: Linde AG, 80331 München (DE)
(72) Erfinder: Matz, Christoph, 85716 Unterschleissheim (DE); Miklos, Ernst, 85551 Kirchheim (DE)

(56) Entgegenhaltungen:
- EP-A- 0 494 521
- EP-A- 1 321 218
- EP-A- 1 462 207
- DE-A1- 19 849 510
- PANGAS: "Schweissen verbindet"[Online] 2003, XP002362478 Dagmersellen Gefunden im Internet: URL:HTTP://WWW.PANGAS.CH/INTERNATIONAL/WEB /LG/CH/LIKELGCHPANGASDE.NSF/REPOSITORYBYAL IAS/PANGAS_SCHWEISSEN_VERBINDET_D/$FILE/PA NGAS_SCHWEISSENVERBINDET_D.PDF>

## Beschreibung

Die Erfindung betrifft ein Verfahren zum Lichtbogenfügen eines Werkstücks unter einem Schutzgas mit einer abschmelzenden Elektrode unter Verwendung eines Kurzlichtbogens, bei welchem Material von der abschmelzenden Elektrode an das Werkstück unter Bildung eines elektronisch gesteuerten elektrischen Kurzschlusses übergeben wird.

Das Lichtbogenfügen unter Schutzgas ist eine viel eingesetzte Fügetechnik. Dabei brennt ein Lichtbogen zwischen einer in einem Brenner angeordneten Elektrode und dem zu bearbeitenden Werkstück. Eine Schweißverbindung entsteht dabei durch ein Aufschmelzen des Grundwerkstoffs an der Bearbeitungsstelle im Lichtbogen und anschließende Wiedererstarrung des Werkstoffs. Wird eine abschmelzende Elektrode verwendet, geht das Material der Elektrode als Zusatzwerkstoff in die Schweißverbindung ein. Bei einer Hartlotverbindung entsteht die stoffschlüssige Verbindung durch das geschmolzene und wiedererstarrte Lot, welches als Zusatzwerkstoff zugegeben wird. Der Grundwerkstoff wird dabei nicht aufgeschmolzen, vielmehr entsteht eine Verklammerung von Lot und Grundwerkstoff. Beim Hartlöten mit Lichtbogen wird dazu meist eine abschmelzende Elektrode verwendet. Für den Übergang des Elektrodenmaterials gibt es unterschiedliche Varianten, die auch zu unterschiedlich brennenden Lichtbögen führen. So gibt es beispielsweise den Sprühlichtbogen, den Lichtbogen mit globularem Tröpfchenübergang, den rotierenden Lichtbogen mit Tröpfchenübergang und den Kurzlichtbogen. Beim Kurzlichtbogen entsteht zwischen der Elektrode und dem Werkstück, welches als zweite Elektrode gepolt wird, während des Elektrodenwerkstoffübergangs, also wenn das flüssige oder teigige Material sich von der Elektrode zu lösen beginnt und sich eine Brücke zwischen Elektrode und Werkstück ausgebildet, ein elektrischer Kurzschluss. Durch den Kurzschluss wird der sich von der Elektrode abzulösen beginnendeTropfen abgeschnürt, worauf sich der Tropfen von der Elektrode löst. In dem elektrischen Feld, das nun nach Auflösung des Kurzschlusses wieder vorliegt, entzündet sich der Lichtbogen wieder. Ein neuer Zyklus beginnt. Von den meisten Schweißgeräten wird der Schweißstrom in dem Moment nach unten geregelt oder abgeschaltet, in welchem der Kurzschluss ausgebildet wird. Folglich muss der Schweißstrom wieder angelegt werden, damit der Lichtbogen neu gezündet werden kann. Dieses Abschalten des Lichtbogens wird vorgenommen, um die Spritzerbildung, die mit der Kurzschlussbildung einhergeht, einzudämmen. In älteren Geräten erfolgt die Lichtbogenabschaltung durch eine elektrische Drossel, in neueren Geräten mittels elektronischer Steuerung.

Beim Fügen wird durch den Lichtbogen lokal Wärme in das Werkstück eingebracht. Dies ist einerseits nötig, um das Werkstück und das Zusatzmaterial zu verflüssigen, ein Schmelzbad entstehen zu lassen und damit nach der Erstarrung eine stoffschlüssige Verbindung vorliegt. Anderseits aber bringt der Wärmeeintrag Probleme mit sich. So treten im Werkstück aufgrund der Temperaturdifferenz Spannungen auf, die zu einem Verzug des Bauteils führen. Beim Schweißen von dünnen Werkstücken, insbesondere von dünnen Blechen mit einer Stärke von wenigen Millimetern, wird die Schmelze sehr leicht aus dem Schweißbad geblasen, so dass es zu Löchern kommt. Auch beim Fügen beschichteter Werkstücken treten Probleme auf, wenn die bei im Vergleich zum Grundwerkstoff niedrigerer Temperatur verdampfende Beschichtung aufgrund des Wärmeeintrags zu einer Rauchbildung führt und es so zu Einschlüssen und Poren in der Schweißnaht kommt. Die letztgenannten Probleme zeigen sich insbesondere beim Fügen verzinkter Bleche.

Prinzipiell weist der Kurzlichtbogen von allen Lichtbogenarten den geringsten Wärmeeintrag auf. Um die auf dem Wärmeeintrag basierenden Probleme zu verringern, wurde nun in jüngster Zeit dieses gute Voraussetzung bezüglich des Wärmeeintrag bietende Verfahren des Schweißens und Hartlötens mit Kurzlichtbogen in Hinblick auf eine Minimierung des Wärmeeintrags weiterentwickelt. Vorrausetzung dafür war die Möglichkeit einer elektronischen Regelbarkeit. Durch die elektronische Regelung wird in erster Linie der Kurzschlussstrom verringert, so dass der Wärmeeintrag in das Werkstück zurückgeht. Ferner wird mit der elektronischen Steuerung die Abruptheit, mit welcher die Kurzschlussbrücke reist und der Materialübergang stattfindet, abgemildert, so dass die Schweißspritzer deutlich abnehmen. Die elektronische Regelung betrifft dabei meist die Strom- und Spannungswerte. Teilweise wird auch die Drahtförderung in die Steuerung mit einbezogen. Verfahren und Apparate zum Schweißen mit elektronisch gesteuertem Kurzlichtbogen sind beispielsweise in den Druckschriften US 2005/0056629, EP 1462207, EP 1379354, WO 2005/042199 und WO 2005/051586 erwähnt. In diesen Druckschriften werden einzig in der EP 1462207 als Schutzgas Argon oder eine Mischungen aus Argon mit geringen Anteilen Sauerstoff empfohlen.

Probleme treten bei diesem Kurzlichtbogenfügen mit elektronischer Steuerung beim Wiederzünden des Lichtbogens auf. Die Schnelligkeit, mit der der Lichtbogen nach der Kurzschlussphase wieder zwischen Elektrode und Werkstück brennt, ist entscheidend für die Qualität der Schweißnaht und auch die zulässige Schweißgeschwindigkeit wird vor allem durch die Wiederzündfähigkeit bestimmt. Die auf die unzureichende Wiederzündfähigkeit zurückzuführenden Probleme führen zu ungleichmäßigen Raupen und zu Poren und Fehler in der Schweißnaht. Auch die Lotverbindung weist Unregelmäßigkeiten und Poren auf. Diese Qualitätsmängel zeigen sich vor allem bei hohen Bearbeitungsgeschwindigkeiten.

In dem Artikel "Schweißen verbindet, Schweiß-, Schneid-, und Schutzgase" von PanGas, erschienen in 2003 in Dagmersellen (D), wird der Einsatz von Dotierungsstoffen beim MIG-Schweißen von Nichteisenmetallen mittels Kurz-, Sprüh-, und Impulslichtbogen offenbart. Es wird hervorgehoben, dass aufgrund der Dotierung die Lichtbogenstabilität erhöht, und die Spritzerneigung reduziert werden. Es werden keine Details zur Lichtbogensteuerung gegeben.

Der Erfindung liegt die Aufgabe zugrunde, ein Verfahren anzugeben, welches die Wiederzündfähigkeit des elektronisch gesteuerten Kurzlichtbogens erhöht, damit auch bei hohen Bearbeitungsgeschwindigkeiten qualitativ hochwertige Schweißnähte und Lotverbindungen entstehen.

Die Aufgabe wird erfindungsgemäß dadurch gelöst, dass das verwendete Schutzgas aus 50 bis 5000 vpm (0,005 bis 0,5 Vol.-%) Sauerstoff, Kohlendioxid, Stickstoffmonoxid, Stickstoff, Distickstoffmonoxid oder einer Mischung aus diesen Gasen in Argon oder in einer Argon-Helium-Mischung besteht. Überraschenderweise hat es sich gezeigt, dass das erfindungsgemäße Verfahren zu einer verbesserten Wiederzündfähigkeit des Lichtbogens führt. Dadurch wird der gesamte Fügeprozess deutlich stabiler und damit besser beherrschbar. Infolgedessen wird die Schweiß- beziehungsweise Lotnaht gleichmäßig mit dem Zusatzmaterial gefüllt, eine gleichbleibende Raupe wird erzeugt und auch die Porenhäufigkeit wird deutlich herabgesetzt. Diese Vorteile stellen sich auch bei hohen Bearbeitungsgeschwindigkeiten ein, welche bisher nur sehr schlecht beherrschbar waren.

Die verbesserte Wiederzündfähigkeit ist auf die Eigenschaften der verwendeten Schutzgasmischung zurückzuführen. Das in der Schutzgasmischung als Dotiergas enthaltene Sauerstoff/Kohlendioxid/Stickstoffmonoxid/Stickstoff/Distickstoffmonoxid lagern sich an der der Oberfläche des Werkstücks an. An diesen Stellen kommt es zu einer Feldüberhöhung des elektrischen Feldes, das durch das Anlegen der Schweißspannung zwischen Elektrode und Werkstück entsteht. An diesen Stellen beginnt nun die Plasmabildung. Zuerst ionisiert nur das Argon. Durch die bei der lonisation freiwerdendenElektronen beginnt der Lichtbogen zu brennen, wodurch sich der Energieeintrag stark erhöht. Nun verdampft Werkstückmaterial und das verdampfte Material ionisiert. Da das Material im Vergleich zum Argon leichter ionisiert, nimmt die Elektronenemission sehr stark zu und der Lichtbogen brennt nun stabil. Durch die Dotierung mit 50 bis 5000 vpm bilden sich vereinzelte Inseln aus angelagertem Dotiergas in ausreichender Zahl, um die Plasmabildung zügig und stabil einsetzen zu lassen. Anderseits ist bei dieser Dotierung die Konzentration der Dotiergase so gering, dass unerwünschte metallurgische Effekte nicht auftreten. Dies gilt nicht nur bei vergleichsweise unempfindlichen Werkstoffen wie beispielsweise allen Stählen sondern auch bei so empfindlichen Werkstoffen wie beispielsweise Aluminium, Aluminiumlegierungen oder Titan. Argon ist notwendiger Bestandteil der Schutzgasmischung, da durch die lonisation des Argons die Elektronenemission einsetzt und der Lichtbogen zu brennen beginnt. Helium unterstützt mit seiner hohen Wärmeleitfähigkeit die einsetzende Metalldampfplasmabildung des Materials und ist deshalb von Vorteil.

Weiterhin hat es sich überraschenderweise herausgestellt, dass bei Verwendung der erfindungsgemäßen Schutzgasmischung am Schweißgerät eine im Verhältnis geringe Schweißspannung gewählt werden kann und auch der sich einstellende Schweißstrom abnimmt. Folglich wird die eingebrachte Leistung herabgesetzt. Dadurch wird der Wärmeeintrag in das Werkstück, der beim elektronisch geregelten Kurzlichtbogen ja bereits sehr gering ist, weiter erniedrigt. Dies verbessert die Bearbeitung dünner Bleche, da die Löcheranfälligkeit ja aufgrund des geringen Wärmeeintrags des erfindungsgemäßen Verfahrens deutlich gesenkt wird. Auch die Bearbeitung beschichteter Bleche, insbesondere mit Zink beschichteter Bleche vereinfacht sich, da aufgrund des geringen Wärmeeintrags die Verdampfung des Beschichtungsmaterials vermindert wird. Weiterhin wird auch die Empfindlichkeit der bearbeiteten Werkstücke hinsichtlich des Verzugs durch die Verminderung des Wärmeeintrags herabgesetzt. Zurückzuführen ist diese Herabsetzung des Wärmeeintrags auf die aufgrund des erfindungsgemäßen Verfahrens verbesserte Wiederzündfähigkeit des elektronisch gesteuerten Kurzlichtbogens.

Vorteilhafterweise enthält das Schutzgas 10 bis 40 Vol.-% Helium. Der Heliumanteil sollte die Obergrenze nicht überschreiten, damit im Schutzgas genügend Argon enthalten ist, so dass die Plasmabildung zügig und stabil einsetzt. Ist weniger Helium als angegeben im Schutzgas enthalten, wird ein auf die hohe Wärmeleitfähigkeit des Heliums zurückzuführender Einfluss auf den Schweißprozess nicht bemerkt. Bevorzugt ist im Schutzgas 25 bis 35 Vol.-% Helium enthalten. Bei diesen Heliumanteilen zeigen sich diese, auf das Helium zurückzuführenden Eigenschaften des Schutzgases besonders ausgeprägt.

Bevorzugt enthält das Schutzgas 200 bis 600 vpm (0,02 bis 0,06 Vol.-%) Sauerstoff, Kohlendioxid, Stickstoffmonoxid, Stickstoff, Distickstoffmonoxid oder einer Mischung aus diesen Gasen. Mit dieser Dotierung wird die Wiederzündfähigkeit besonders vorteilhaft unterstützt.

Es hat sich gezeigt, dass das erfindungsgemäße Verfahren die vorgenannten Vorteile in besonders ausgezeichneter Weise aufweist, wenn das Schutzgas aus 300 vpm (0,03 Vol.-%) Sauerstoff, 30 Vol.-% Helium und Argon im verbleibenden Volumenrest besteht. Weiterhin hat es sich gezeigt, dass, wenn eine Dotierung mit Kohlendioxid erfolgt, sich die Vorteile der Erfindung auch für eine Schutzgasmischung bestehend aus 300 vpm (0,03 Vol.-%) Kohlendioxid, 25 bis 30 Vol.-% Helium und Argon im verbleibenden Volumenrest einstellen. Bei einer Dotierung mit Stickstoffmonoxid empfiehlt es sich ein Schutzgas bestehend aus 300 vpm (0,03 Vol.-%) Stickstoffmonoxid, 30 Vol.-% Helium und restlich Argon zu verwenden.

Das erfindungsgemäße Verfahren zeigt seine Vorteile, wenn Werkstücke mit einer Dicke von weniger als 5 mm, vorzugsweise von weniger als 3 mm verfügt werden. So werden auch bei dünnen Blechen mit Wandstärken von wenigen Millimetern Fügeverbindungen ohne Löcher erreicht.

In einer vorteilhaften Ausgestaltung der Erfindung werden Werkstücke aus Aluminium oder Aluminiumlegierungen verschweißt. Aufgrund der niedrigen Konzentration der Dotiergase stellt sich keine metallurgische Reaktion ein und die Vorteile der Erfindung können auch bei diesen empfindlichen Werkstoffen zum Tragen kommen.

In einer anderen vorteilhaften Ausgestaltung der Erfindung werden Werkstücke aus Stahllegierungen verschweißt. Auch bei diesen Werkstoffen zeigen sich die Vorteile des erfindungsgemäßen Verfahrens.

In einer weiteren vorteilhaften Ausgestaltung der Erfindung wird ein Werkstück aus Aluminium oder einer Aluminiumlegierungen mit einem Werkstück aus Stahl oder beschichtetem Stahl mit einem Lot auf Aluminiumbasis gefügt. Aufgrund des sehr geringen Wärmeeintrags des erfindungsgemäßen Verfahrens können qualitativ hochwertige Fügeverbindungen auch aus diesen unterschiedlichen Materialien hergestellt werden. Dies ist eben auch für beschichteten und insbesondere für verzinkten Stahl möglich. Für die Fügeverbindung schmilzt dabei das Werkstück aus Aluminium oder einer Aluminiumlegierungen auf während das Werkstück aus Stahl nur erwärmt wird. Die stoffschlüssige Verbindung ist somit eine Mischform aus Schweiß- und Lotverbindung.

In einer weiteren vorteilhaften Ausgestaltung der Erfindung werden Werkstücke aus beschichteten oder unbeschichteten Stahllegierungen mit einem Lot auf Kupfe r-Aluminium-Basis oder Kupfer-Silizium-Basis verlötet. Auch beim Hartlöten mit Lichtbogen wird die Wiederzündfähigkeit des elektronisch gesteuerten Lichtbogens mit dem erfindungsgemäßen Verfahren erhöht. Die vorgenannten Ausführungen gelten auch für das Löten, da er Zündmechanismus und die Plasmabildung für diese beide Fügetechniken nahezu identisch sind.

In einer weiteren vorteilhaften Ausgestaltung der Erfindung wird ein Werkstück aus Aluminium oder einer Aluminiumlegierungen mit einem Werkstück aus Stahl oder beschichtetem Stahl mit einem Lot auf Zinkbasis verlötet. Auch hier zeigen sich die erfindungsgemäßen Vorteile.

## Patentansprüche

1. Verfahren zum Lichtbogenfügen eines Werkstücks unter einem Schutzgas mit einer abschmelzenden Elektrode unter Verwendung eines Kurzlichtbogens, bei welchem Material von der abschmelzenden Elektrode an das Werkstück unter Bindung eines elektronisch gesteuerten elektrischen Kurzschlusses übergeben wird, **dadurch gekennzeichnet, dass** das Schutzgas aus 50 bis 5000 vpm (0,005 bis 0,5 Vol.-%) Sauerstoff, Kohlendioxid, Stickstoffmonoxid, Stickstoff, Distickstoffmonoxid oder einer Mischung aus diesen Gasen in Argon oder in einer Argon-Helium-Mischung besteht.

2. Verfahren nach Anspruch 1, **dadurch gekennzeichnet, dass** das Schutzgas 10 bis 40 Vol.-% Helium, bevorzugt 25 bis 35 Vol.% Helium enthält.

3. Verfahren nach Anspruch 1 oder 2, **dadurch gekennzeichnet, dass** das Schutzgas 200 bis 600 vpm (0,02 bis 0,06 Vol.-%) Sauerstoff, Kohlendioxid, Stickstoffmonoxid, Stickstoff, Distickstoffmonoxid oder einer Mischung aus diesen Gasen enthält.

4. Verfahren nach einem der Ansprüche 1 bis 3, **dadurch gekennzeichnet, dass** das Schutzgas aus 300 vpm (0,03 Vol.-%) Sauerstoff, 30 Vol.-% Helium und Argon im verbleibenden Volumenrest besteht.

5. Verfahren nach einem der Ansprüche 1 bis 4, **dadurch gekennzeichnet, dass** Werkstücke mit einer Dicke von weniger als 5 mm, vorzugweise von weniger als 3 mm verfügt werden.

6. Verfahren nach einem der Ansprüche 1 bis 5, **dadurch gekennzeichnet, dass** Werkstücke aus Aluminium oder Aluminiumlegierungen verschweißt werden.

7. Verfahren nach einem der Ansprüche 1 bis 5, **dadurch gekennzeichnet, dass** Werkstücke aus Stahllegierungen verschweißt werden.

8. Verfahren nach einem der Ansprüche 1 bis 5, **dadurch gekennzeichnet, dass** ein Werkstück aus Aluminium oder einer Aluminiumlegierungen mit einem Werkstück aus Stahl oder beschichtetem Stahl mit einem Lot auf Aluminiumbasis gefügt wird.

9. Verfahren nach einem der Ansprüche 1 bis 5, **dadurch gekennzeichnet, dass** Werkstücke aus beschichteten oder unbeschichteten Stahllegierungen mit einem Lot auf Kupfer-Aluminium-Basis oder Kupfer-Silizium-Basis verlötet werden.

10. Verfahren nach einem der Ansprüche 1 bis 5, **dadurch gekennzeichnet, dass** ein Werkstück aus Aluminium oder einer Aluminiumlegierungen mit einem Werkstück aus Stahl oder beschichtetem Stahl mit einem Lot auf Zinkbasis verlötet wird.

## Claims

1. Process for the arc joining of a workpiece under a shielding gas with a melting electrode using a short arc, in which material from the melting electrode is transferred to the workpiece with formation of an electronically controlled short circuit, **characterized in that** the shielding gas consists of 50 to 5000 vpm (0.005-0.5% by volume) of oxygen, carbon dioxide, nitrogen monoxide, nitrogen, dinitrogen monoxide or a mixture of these gases in argon or in an argon/helium mixture.

2. Process according to Claim 1, **characterized in that** the shielding gas 10 contains up to 40% by volume of helium, with preference 25 to 35% by volume of helium.

3. Process according to Claim 1 or 2, **characterized in that** the shielding gas contains 200 to 600 vpm (0.02 to 0.06% by volume) of oxygen, carbon dioxide, nitrogen monoxide, nitrogen, dinitrogen monoxide or a mixture of these gases.

4. Process according to one of Claims 1 to 3, **characterized in that** the shielding gas consists of 300 vpm (0.03% by volume) of oxygen, 30% by volume of helium and argon in the remaining amount by volume.

5. Process according to one of Claims 1 to 4, **characterized in that** workpieces with a thickness of less than 5 mm, preferably of less than 3 mm, are joined.

6. Process according to one of Claims 1 to 5, **characterized in that** workpieces of aluminium or aluminium alloys are welded.

7. Process according to one of Claims 1 to 5, **characterized in that** workpieces of steel alloys are welded.

8. Process according to one of Claims 1 to 5, **characterized in that** a workpiece of aluminium or an aluminium alloy is joined to a workpiece of steel or coated steel with an aluminium-based solder.

9. Process according to one of Claims 1 to 5, **characterized in that** workpieces of coated or uncoated steel alloys are soldered with a copper-aluminium-based or copper-silicon-based solder.

10. Process according to one of Claims 1 to 5, **characterized in that** a workpiece of aluminium or an aluminium alloy is soldered to a workpiece of steel or coated steel with a zinc-based solder.

## Revendications

1. Procédé pour le soudage électrique d'une pièce sous un gaz protecteur avec une électrode consommable avec utilisation d'un arc électrique court, dans lequel on transfère de la matière de l'électrode consommable à la pièce en formant un court-circuit électrique commandé électroniquement, **caractérisé en ce que** le gaz protecteur se compose de 50 à 5000 vpm (0,005 à 0,5 % en volume) d'oxygène, de dioxyde de carbone, de monoxyde d'azote, d'azote, de protoxyde d'azote ou d'un mélange de ces gaz dans l'argon ou dans un mélange d'argon-hélium.

2. Procédé selon la revendication 1, **caractérisé en ce que** le gaz protecteur contient 10 à 40 % en volume d'hélium, de préférence 25 à 35 % % en volume d'hélium.

3. Procédé selon la revendication 1 ou 2, **caractérisé en ce que** le gaz protecteur contient 200 à 600 vpm (0,02 à 0,06 % en volume) d'oxygène, de dioxyde de carbone, de monoxyde d'azote, d'azote, de protoxyde d'azote ou d'un mélange de ces gaz.

4. Procédé selon l'une quelconque des revendications 1 à 3, **caractérisé en ce que** le gaz protecteur se compose de 300 vpm (0,03 % en volume) d'oxygène, 30 % en volume d'hélium et d'argon pour le volume résiduel restant.

5. Procédé selon l'une quelconque des revendications 1 à 4, **caractérisé en ce que** l'on assemble des pièces ayant une épaisseur de moins de 5 mm, de préférence de moins de 3 mm.

6. Procédé selon l'une quelconque des revendications 1 à 5, **caractérisé en ce que** l'on soude des pièces en aluminium ou en alliages d'aluminium.

7. Procédé selon l'une quelconque des revendications 1 à 5, **caractérisé en ce que** l'on soude des pièces en aciers alliés.

8. Procédé selon l'une quelconque des revendications 1 à 5, **caractérisé en ce que** l'on assemble une pièce en aluminium ou en un alliage d'aluminium à une pièce en acier ou en acier revêtu avec un métal d'apport à base d'aluminium.

9. Procédé selon l'une quelconque des revendications 1 à 5, **caractérisé en ce que** l'on brase des pièces en aciers alliés revêtus ou non revêtus avec un métal d'apport à base de cuivre-aluminium ou à base de cuivre-silicium.

10. Procédé selon l'une quelconque des revendications 1 à 5, **caractérisé en ce que** l'on brase une pièce en aluminium ou en un alliage d'aluminium à une pièce en acier ou en acier revêtu avec un métal d'apport à base de zinc.
